Europäisches Patentamt

European Patent Office

Office européen des brevets

(19)

(11) Veröffentlichungsnummer: **0 013 323**
**B1**

(12) **EUROPÄISCHE PATENTSCHRIFT**

(45) Veröffentlichungstag der Patentschrift:
**10.03.82**

(51) Int. Cl.³: **B 23 K  28/00,** B 23 K  31/02,
B 23 K  35/30

(21) Anmeldenummer: **79104685.7**

(22) Anmeldetag: **24.11.79**

(54) **Verfahren zum Schweissen von Gusseisen.**

(30) Priorität: **15.01.79  DE 2901338**

(43) Veröffentlichungstag der Anmeldung:
**23.07.80 Patentblatt 80/15**

(45) Bekanntmachung des Hinweises auf die Patenterteilung:
**10.03.82 Patentblatt 82/10**

(84) Benannte Vertragsstaaten:
**AT CH FR GB IT**

(56) Entgegenhaltungen:
**CH-A-514 392**
**CH-A-531 909**
**DE-B-1 188 911**
**DE-A-1 752 401**
**DE-B1-2 437 247**

(73) Patentinhaber: **MESSER GRIESHEIM GMBH,**
**Patentabteilung Hanauer Landstrasse 330,**
**D-6000 Frankfurt/Main (DE)**

(72) Erfinder: **Hennemann, Klaus, Schlesierweg 8,**
**D-6238 Hofheim/Ts. (DE)**
Erfinder: **Mondre, Josef, Assenheimerstrasse 25,**
**D-6367 Karben 1 (DE)**

## Verfahren zum Schweißen von Gußeisen

Die vorliegende Erfindung betrifft ein Verfahren zum Schweißen von Gußeisen mittels Schweißzusätzen aus Nickel-Eisen-Legierungen.

Für das Schweißen von Gußeisen haben sich Schweißzusätze aus Nickel-Eisen-Legierungen gut bewährt, wenn es darum geht, Schweißverbindungen bei Raumtemperatur oder bei nur geringer Vorwärmung herzustellen und wenn von den Verbindungen hohe Festigkeit und Zähigkeit sowie Druckdichtheit gefordert wird. Derartige Anforderungen werden vor allem an Schweißverbindungen an Gußeisen mit Kugelgrafit gestellt (DE-B-2 437 247).

Nickel-Eisen-Legierungen werden sowohl als umhüllte Stabelektroden als auch in Form von Massivdraht- oder Fülldraht-Elektroden für das Schweißen von Gußeisen verwendet. Diese Elektroden werden im weiteren allgemein als Schweißzusätze bezeichnet.

Ein Nachteil der Nickel-Eisen-Legierungen besteht aber darin, daß bei Mehrlagenschweißungen das Gefüge des Schweißgutes von Lage zu Lage immer grobkörniger wird, so daß in den oberen Lagen ausgeprägte Stengelkristalle entstehen. Ein solches grobstengeliges Gefüge neigt zur Heißrissigkeit.

Unter dem Einfluß der beim Gußeisen-Schweißen entstehenden großen Schweißeigenspannungen treten deshalb in Mehrlagenschweißungen mit Nickel-Eisen-Schweißzusätzen oft Heißrisse in den oberen Schweißlagen auf.

Diese Heißrisse können bei Mehrlagenschweißungen in ungünstigen Fällen schon in der zweiten Lage auftreten. Mit Sicherheit lassen sich Heißrisse beim Schweißen mit Nickel-Eisen-Schweißzusätzen nur in Einlagenschweißungen bzw. bei Schweißungen mit Lage und Gegenlage vermeiden. Die Begrenzung auf Einlagenschweißungen bringt eine Begrenzung der Werkstückdicke mit sich und ist somit als Nachteil zu bewerten.

Aus »Nickel-Berichte 24 (1966) Nr. 1/2, S. 32« ist bereits ein Verfahren zum Schweißen von Gußeisen bekannt, gemäß dem sowohl eine feste Schweißverbindung erzeugt als auch die Rißgefahr verringert wird. Hierbei wird jede Schweißlage sofort schnell mit Wasser abgekühlt, so daß durch dieses Abschrecken die Rißgefahr verringert wird.

Aufgabe der vorliegenden Erfindung ist es, ein Verfahren zum Schweißen von Gußeisen zu schaffen, mit dem es möglich ist, Mehrlagenschweißungen ohne Heißrißbildung an Gußeisen-Werkstücken auszuführen.

Zur Lösung der genannten Aufgabe wird gemäß der Erfindung vorgeschlagen, daß auf die Verbindungsflächen der zu verschweißenden Gußteile zunächst mittels den Schweißzusätzen aus Nickel-Eisen-Legierungen eine oder zwei Pufferlagen aufgebracht werden, und daß dann die eigentliche Verbindungsschweißung mit Schweißzusätzen aus Chromstahl, Chrom-Nikkelstahl, Nickel-Chrom- oder Nickel-Kupfer-Legierungen durchgeführt wird.

Erfindungsgemäß wird also zunächst eine sogenannte Pufferlage auf die zu verbindenden Werkstücke mit Nickel-Eisen-Schweißzusätzen aufgetragen. Die Pufferlage kann ein oder zweilagig sein. Die endgültige Verbindung wird dann anschließend mit Schweißzusätzen auf Stahl- oder Nickel-Basis hergestellt. Als besonders geeignet hierfür hat sich erfindungsgemäß ein Schweißzusatz mit 15–35 Gew.-% Cr (vorzugsweise 25%) und 0–10 Gew.-% Ni (vorzugsweise 5%) Rest Fe und den üblichen Beimengungen an C, Si, Mn, erwiesen. Das reine Schweißgut derartiger Schweißzusätze hat ein ferritisch-austenitisches Gefüge. Wird dieser Zusatz auf eine Pufferlage aus Nickel-Eisen geschweißt, so erfolgt eine Erhöhung des Nickelgehaltes und eine Verringerung des Chromgehaltes im Schweißgut. Dadurch wird der Austenitanteil im Gefüge vergrößert, womit ein sehr zähes Schweißgut entsteht. Andererseits bleibt jedoch ein genügend großer Anteil an Delta-Ferrit im Schweißgut bestehen, so daß die Heißrißsicherheit gewährleistet ist.

Ähnlich gute Resultate erzielt man mit Schweißzusätzen aus 30%igem Chromstahl oder mit einem Schweißzusatz aus 30% Cr, 10% Ni, Rest Fe.

Beim Schweißen der endgültigen Verbindung ist darauf zu achten, daß die Pufferlage aus Nickel-Eisen nicht völlig wieder aufgeschmolzen wird, weil andernfalls das hochchromhaltige Schweißgut direkt an den Grundwerkstoff gelangt. In diesem Falle kommt es zu einer starken Versprödung des Chromstahl-Schweißgutes infolge der Kohlenstoffaufnahme aus dem Gußeisen. Die Pufferschicht aus Nickel-Eisen sollte deshalb immer so dick wie möglich sein.

An Stelle von Chromstahl-Zusätzen können für das endgültige Verbinden erfindungsgemäß auch Schweißzusätze aus Nickel-Chrom- oder Nickel-Kupfer-Legierungen verwendet werden. Die Güte derartiger Verbindungen ist höher als die Güte der mit Chromstahl-Zusätzen geschweißten Verbindungen.

Das erfindungsgemäße Verfahren eignet sich in vorteilhafter Weise auch für Schweißverbindungen zwischen Stahl und Gußeisen. Hierbei braucht jedoch nur auf das Gußeisen eine Pufferschicht aus Nickel-Eisen aufgetragen zu werden. Die Stahlseite kann unbeschadet mit dem Chromstahl- oder Nickelbasis-Schweißgut in Berührung kommen.

Im folgenden soll die vorliegende Erfindung an einigen Beispielen erläutert werden.

### Beispiel I

Eine Rohrleitung aus Gußeisen soll durch Schweißen hergestellt werden. Die Rohrwanddicke beträgt 20 mm. Zunächst werden die Stirnflächen der einzelnen Rohrstücke in einem Winkel von 30° abgeschrägt. Danach wird nach dem MIG-Schweißverfahren mit einer 1,2-mm-Drahtelektrode aus einer Ni-Fe-Legierung (55% Ni, 45% Fe) eine zweilagige Pufferschicht auf die abgeschrägten Stirnflächen aufgeschweißt. Anschließend werden die Pufferschichten überschliffen, so daß sich eine 60°-V-Fuge für die endgültige Verbindungsschweißung ergibt. Das endgültige Verbinden der Rohre erfolgt mit Hilfe von umhüllten Stabelektroden, deren reines Schweißgut 25% Cr und 4% Ni, Rest Fe enthält. Für das Auffüllen der V-Fuge sind etwa zehn Schweißlagen erforderlich.

Beispiel II

Ein Rohr aus Gußeisen soll mit einem 50 mm breiten Flansch aus Gußeisen versehen werden. Zu diesem Zweck wird zunächst eine ringförmige Pufferlage aus Nickel-Eisen in etwa 60 mm Abstand vom Rohrende aufgeschweißt. Die Seitenfläche des Flansches wird in unmittelbarer Nähe der Innenbohrung ebenfalls mit einer ringförmigen Pufferlage aus Nickel-Eisen versehen. Nunmehr wird der Flansch auf das Rohr geschoben, so daß sich beide Pufferschweißungen berühren. Die endgültige Verbindung wird nach dem MIG-Verfahren mit einer Drahtelektrode aus 25% Cr, 4% Ni, Rest Fe als Kehlnahtschweißung hergestellt.

Beispiel III

Ein Rohr aus Gußeisen soll mit einem Stahlflansch versehen werden. Zu diesem Zweck wird nur auf das Rohr eine ringförmige Pufferschicht aus einer Nickel-Eisen-Legierung gelegt. Der Stahlflansch wird auf das Rohr geschoben und die endgültige Verbindung zwischen Pufferlage und Flansch wird mit einer Nickel-Chrom-Drahtelektrode nach dem MIG-Verfahren hergestellt.

**Patentansprüche**

1. Verfahren zum Schweißen von Gußeisen mittels Schweißzusätzen aus Nickel-Eisen-Legierungen, dadurch gekennzeichnet, daß auf die Verbindungsflächen der zu verschweißenden Gußteile zunächst mittels den Schweißzusätzen aus Nickel-Eisen-Legierungen ein oder zwei Pufferlagen aufgebracht werden, und daß dann die eigentliche Verbindungsschweißung mit Schweißzusätzen aus Chromstahl, Chrom-Nikkelstahl, Nickel-Chrom- oder Nickel-Kupfer-Legierungen durchgeführt wird.
2. Verfahren nach Anspruch 1, dadurch gekennzeichnet, daß für das Schweißen der Pufferlagen Schweißzusätze mit Nickelgehalten von 30—70 Gew.-% und Eisengehalten von 70—30 Gew.-% verwendet werden.
3. Verfahren nach Anspruch 1 oder 2, dadurch gekennzeichnet, daß für die eigentliche Verbindungsschweißung ein Schweißzusatz mit 15—35 Gew.-% Chrom, Rest Eisen und den üblichen Beimengungen an C, Si, Mn verwendet wird.
4. Verfahren nach Anspruch 1 oder 2, dadurch gekennzeichnet, daß für die eigentliche Verbindungsschweißung ein Schweißzusatz mit 15—35 Gew.-% Chrom und 0—10 Gew.-% Nickel, Rest Eisen und den üblichen Beimengen an C, Si, Mn verwendet wird.
5. Verfahren nach Anspruch 1 oder 2, dadurch gekennzeichnet, daß für das eigentliche Verbindungsschweißen ein Schweißzusatz mit 15—35 Gew.-% Chrom, 0—10 Gew.-% Ni sowie mit weiteren Legierungselementen wie Mo, V, Ti, Nb, Co und W bis zu einem Gesamtgehalt von 15 Gew.-%, Rest Eisen und den üblichen Beimengungen verwendet wird.
6. Verfahren nach Anspruch 1 oder 2, dadurch gekennzeichnet, daß die eigentliche Verbindungsschweißung mit einem Nickel-Chrom-Schweißzusatz von 60—80 Gew.-% Nickel, 15—25 Gew.-% Chrom, Rest Fe, Mo, Mn, Nb, Ti und sonstige Beimengungen durchgeführt wird.
7. Verfahren nach Anspruch 1 oder 2, dadurch gekennzeichnet, daß für die eigentliche Verbindungsschweißung ein Schweißzusatz mit 55—75 Gew.-% Ni, 35—45 Gew.-% Cu, Rest Fe, Mn, Ti und sonstige Beimengungen verwendet wird.
8. Verfahren nach einem der voranstehenden Ansprüche, gekennzeichnet durch seine Verwendung zum Verschweißen von Gußeisen mit Stahl, wobei lediglich auf das Gußeisen die Pufferschicht aufgebracht wird.

**Claims**

1. In a process for welding cast iron with welding alloys of nickel-iron compositions, the improvement being applying one or two interlayers on the joint faces of the cast articles to be welded together, and producing the actual joint weld with welding alloys selected form the group consisting of chromesteel, chrom-nickelsteel, nickel-chrome and nickel-copper compositions.
2. Process according to claim 1, characterized in using welding alloys with nickel contents of 30—70 percent by weight and iron contents of 70—30 percent by weight for welding the interlayers.
3. Process according to claim 1 or 2, characterized in using a welding alloy with 15—35 percent by weight of chrome and the remainder being iron and additions of C, Si and Mn for the actual weld.
4. Process according to claim 1 or 2, characterized in using a welding alloy with 15—35 percent by weight of chrome and 0—10 percent by weight of nickel and the remainder being iron and additions of C, Si and Mn for the actual weld.

5. Process according to claim 1 or 2, characterized in using a welding alloy with 15−35 percent by weight of chrome, 0−10 percent by weight of Ni as well as other composition elements including Mo, V, Ti, Nb, Co and W to a total content of 15 percent by weight with the standard remainder for the actual weld. .

6. Process according to claim 1 or 2, characterized in producing the actual weld with a nickel-chrome welding alloy of 60−80 percent by weight of nickel, 15−25 percent by weight of chrome and the remainder including Fe, Mo, Mn, Nb and Ti.

7. Process according to claim 1 or 2, characterized in using a welding alloy with 55−75 percent by weight of Ni, 35−45 percent by weight of Cu and the remainder including Fe, Mn and Ti for the actual weld.

8. Process according to any of claims 1 to 7, characterized in that cast iron and steel are welded together, and the interlayer is only applied on the cast iron.

## Revendications

1. Procédé pour souder la fonte au moyen d'ajouts de soudure en alliages nickel-fer, procédé caractérisé en ce que, sur les surfaces de jonction des pièces en fonte à souder, on dépose tout d'abord, au moyen des ajouts de soudure en alliages nickel-fer, une ou deux couches-tampons, et ensuite la soudure de jonction proprement dite, est effectuée avec des ajouts de soudure en acier au chrome, en acier au chrome-nickel, en alliages nickel-chrome ou bien nickel-cuivre.

2. Procédé selon la revendication 1, caractérisé en ce que pour la soudure des couches-tampons, des ajouts de soudure avec une teneur en nickel de 30 à 70% en poids et une teneur en fer de 70 à 30% en poids sont utilisés.

3. Procédé selon la revendication 1 ou 2, caractérisé en ce que pour la soudure de liaison proprement dite, un ajout de soudure avec 15 à 35% en poids de chrome, comportant pour le reste, du fer et les additifs habituels en C, Si, Mn, est utilisé.

4. Procédé selon la revendication 1 ou 2, caractérisé en ce que pour la soudure de liaison proprement dite, un ajout de soudure avec 15 à 35% en poids de chrome, et 0 à 10% en poids de nickel, comportant pour le reste du fer, et les additifs habituels en C. Si, Mn, est utilisé.

5. Procédé selon la revendication 1 ou 2, caractérisé en ce que pour la soudure de liaison proprement dite, un ajout de soudure avec 15 à 35% en poids de chrome, 0 à 10% en poids de nickel, ainsi qu'avec d'autres éléments d'alliages tels Mo, V, Ti, Nb, Co et W, pour une teneur totale de 15% en poids, le reste étant du fer et les additifs habituels, est utilisé.

6. Procédé selon la revendication 1 ou 2, caractérisé en ce que la soudure de liaison proprement dite est effectuée avec un ajout de soudure nickel-chrome de 60 à 80% en poids de nickel, 45% en poids de chrome, le reste étant Fe, Mo, Mn, Nb, Ti et d'autres additifs.

7. Procédé selon la revendication 1 ou 2, caractérisé en ce que pour la soudure de liaison proprement dite, un ajout de soudure avec 55 à 75% en poids de nickel, 35 à 45% en poids de cuivre, le reste étant Fe, Mn, Ti et d'autres additifs, est utilisé.

8. Procédé selon l'une quelconque des revendications précédentes, caractérisé en ce qu'il est utilisé pour la soudure de la fonte avec l'acier, la couche-tampon étant uniquement déposé sur la fonte.